# EUROPEAN PATENT APPLICATION

(11) **EP 4 503 663 A1**
(43) Date of publication of application: **05.02.2025**
(21) Application number: 23810578.7
(22) Date of filing: 28.02.2023
(51) Int. Cl.: H04W 4/029

(54) **ELECTRONIC FENCE ALARM METHOD AND APPARATUS, ELECTRONIC DEVICE, AND STORAGE MEDIUM**

(30) Priority: 25.05.2022 CN 202210580562
(71) Applicant: ZTE Corporation, Shenzhen, Guangdong 518057 (CN)
(72) Inventor: CHAO, Penghui, Shenzhen, Guangdong 518057 (CN)
(74) Representative: Cristinelli, Luca
(86) International application number: PCT/CN2023/078831
(87) International publication number: WO 2023/226502

(57) **Abstract**

Disclosed in the present disclosure are an electronic fence alarm method and apparatus, an electronic device, and a storage medium. The method comprises: reading motion data of a device; predicting, according to the motion data, a state of the device entering or leaving an electronic fence to obtain a prediction result; and starting, according to the prediction result, detection of the state of the device entering or leaving the electronic fence. By using the solution provided by the present disclosure, the fence alarm sensitivity can be improved, and the power consumption of the device is not influenced.

## Description

### Cross-Reference to Related Application

The present disclosure claims the priority of Chinese patent application No. CN202210580562.2, filed on May 25, 2022 and entitled "ELECTRONIC FENCE ALARM METHOD AND APPARATUS, ELECTRONIC DEVICE, AND STORAGE MEDIUM", the content of which is incorporated herein by reference in its entirety.

### Technical Field

The present disclosure relates to the technical field of fence warning, and in particular to, an electronic fence alarm method and apparatus, an electronic device, and a storage medium.

### Background

With the development of communication technology and the continuous improvement of the concept of the Internet of Things, loT, narrow-band loT devices have characteristics of wide network coverage, low power consumption, a large number of accessed devices, low module cost, and the like, so that there are more and more products using the functions of the narrow-band loT devices. The narrow-band loT devices include low-power tracking devices. The existing low-power tracking device products all have an electronic fence function. A geographic electronic fence warning method usually determines a state of an electronic fence through timing positioning, and sends fence warning information when the state changes. There are usually two ways to determine a state of a Wi-Fi electronic fence: 1. Set a Service Set Identifier, SSID, and password of the Wi-Fi electronic fence, and determine, by automatically connecting the device to a set Wi-Fi and disconnecting the device from the set Wi-Fi, a state of entering or leaving the Wi-Fi electronic fence. 2. Set an SSID of a Wi-Fi electronic fence and determine, by scanning a set Wi-Fi regularly through the device, a state of entering or leaving the Wi-Fi electronic fence.

For the processing of the geographic electronic fence, if a time interval for timing is too short, it will have a significant impact on the power consumption of the device. If the time interval for timing is too long, it will be insensitive to the determining the state of entering or leaving the fence, and state omission easily occurs. For the processing of the Wi-Fi electronic fence, the first method described above is sensitive, but a Wi-Fi module needs to be in a working state all the time, which increases the power consumption. In the second method, if a time interval for regular scanning is too short, it will affect the power consumption of the device. If the time interval for regular scanning is too long, the response of the device to the state of entering or leaving the Wi-Fi electronic fence will not be sensitive enough, which affects the user experience.

Whether it is the geographic electronic fence or the Wi-Fi electronic fence, the device determines the state of entering or leaving the electronic fence by regular positioning or Wi-Fi scanning, and warns if it is detected that a person enters or leaves the fence. However, the two methods have the following defects: If the time interval for timing is too short, it will increase the power consumption of the device per unit time, so that the service life of the device is shortened under the same battery level. If the set time interval is too long, it will affect the device from determining the state of entering or leaving the fence, so that state omission easily occurs. As a result, a user cannot receive the electronic fence warning, and the user experience is affected.

### Summary

To at least solve the technical problem of omission of electronic fence warning or high power consumption, the embodiments of the present disclosure provide an electronic fence warning method and apparatus, an electronic device, and a storage medium.

The technical solutions in the embodiments of the present disclosure are implemented as follows:
The embodiments of the present disclosure provide an electronic fence warning method. The method includes: obtaining motion data of a device; predicting, according to the motion data, a state of the device entering or leaving an electronic fence; and activating, according to the prediction result, detection on the state of the device entering or leaving the electronic fence.

The embodiments of the present disclosure provide an electronic fence warning apparatus. The apparatus includes: an obtaining module, configured to read motion data of a device; a prediction module, configured to predict, according to the motion data, a state of the device entering or leaving an electronic fence; and an activation module, configured to activate, according to the prediction result, detection on the state of the device entering or leaving the electronic fence.

The embodiments of the present disclosure further provide an electronic device, including: a processor and a memory configured to store a computer program runnable on the processor. When run the computer program, the processor is configured to execute the steps of any one of the above methods.

The embodiments of the present disclosure further provide a storage medium, having a computer program stored thereon. The computer program, when run by a processor, implement the steps of any one of the above methods.

### Brief Description of the Drawings

Fig. 1 is a flowchart of an electronic fence warning method according to an embodiment of the present disclosure;
Fig. 2 is another flowchart of an electronic fence warning method according to an embodiment of the present disclosure;
Fig. 3 is another flowchart of an electronic fence warning method according to an embodiment of the present disclosure;
Fig. 4 is another flowchart of an electronic fence warning method according to an embodiment of the present disclosure;
Fig. 5 is a schematic structural diagram of a composition of a low-power tracking device according to an embodiment of the present disclosure;
Fig. 6 is a schematic diagram of a training process according to an embodiment of the present disclosure;
Fig. 7 is a schematic diagram of a geographic electronic fence warning process according to an application embodiment of the present disclosure;
Fig. 8 is a schematic diagram of a Wi-Fi electronic fence warning process according to an embodiment of the present disclosure;
Fig. 9 is a schematic structural diagram of an electronic fence warning apparatus according to an embodiment of the present disclosure; and
Fig. 10 is a diagram of an internal structure of a computer device according to an embodiment of the present disclosure.

### Detailed Description of the Embodiments

The present disclosure will be explained in detail below in conjunction with the accompanying drawings and embodiments.

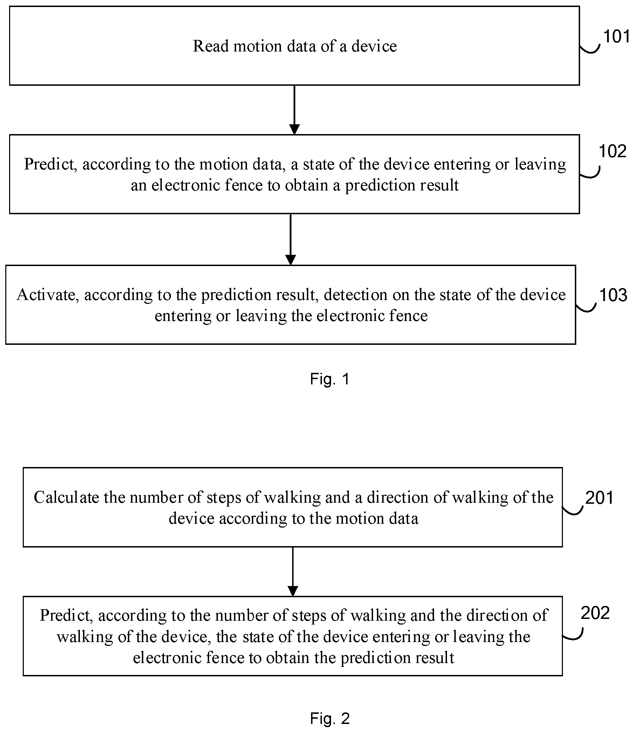

The embodiments of the present disclosure provide an electronic fence warning method. As shown in Fig. 1, the method may include, but is not limited to, the following operations.
Step 101: Motion data of a device is obtained.
Step 102: A state of the device entering or leaving an electronic fence is predicted according to the motion data to obtain a prediction result.
Step 103: Detection on the state of the device entering or leaving the electronic fence is activated according to the prediction result.

In an exemplary implementation, the method of this embodiment can be applied to an electronic fence warning function of a low-power tracking device.

Further, in this embodiment, the state of the device entering or leaving the electronic fence is mainly predicted using data of an acceleration sensor and a direction sensor, and whether to perform positioning or Wi-Fi scanning is determined according to the reasoned prediction result, to detect the state of the device entering or leaving the fence. The acceleration sensor and the direction sensor are configured to sense acceleration information and motion direction information of the device. For a geographic electronic fence, the state of entering or leaving the electronic fence is detected by positioning. For a Wi-Fi electronic fence, the state of entering or leaving the electronic fence is detected by performing Wi-Fi scanning.

In the prior art, for the processing of the electronic fence, if a time interval for timing positioning or timing scanning is too short, it will have a significant impact on the power consumption of the device. If the time interval for timing is too long, it will be insensitive to the determining the state of entering or leaving the fence, and state omission easily occurs. In this embodiment, timing positioning data and the data acquired by the acceleration sensor and the direction sensor are calculated for analysis to determine whether to detect the state of entering or leaving the fence. A user can be informed of the state of the fence immediately without shortening the time intervals for positioning and Wi-Fi scanning.

Further, in an embodiment, before the motion data acquired by the acceleration sensor and the direction sensor is obtained, the method may further include:
The device is positioned and detected to obtain position information of the device;
whether the position information of the device is within a preset position range is determined; and
the motion data of the device is obtained when the position information of the device is within the preset position range.

In an exemplary implementation, the preset position range can be set as an electronic fence range, or can be set as an electronic fence range and a range close to a periphery of the electronic fence. In practical applications, when the device is within the electronic fence range, or the device is within the range close to the periphery of the electronic fence, the motion data acquired by the acceleration sensor and the direction sensor is then obtained for prediction, which can reduce unnecessary calculations performed by the device.

Further, this embodiment can provide two methods for predicting the state of the device entering or leaving the fence.

In the first method:
Referring to Fig. 2, in an embodiment, a state of the device entering or leaving an electronic fence is predicted according to the motion data to obtain a prediction result, which includes:
Step 201: The number of steps of walking and a direction of walking of the device are calculated according to the motion data.
Step 202: The state of the device entering or leaving the electronic fence is predicted according to the number of steps of walking and the direction of walking of the device, to obtain the prediction result.

In this embodiment, the number of steps of walking and the direction of walking of the device are calculated according to the data acquired by the acceleration sensor and the direction sensor, and whether to perform positioning or Wi-Fi scanning is determined according to a calculation result, to detect the state of entering or leaving the fence.

In the second method:
In an embodiment, a state of the device entering or leaving an electronic fence is predicted according to the motion data to obtain a prediction result, which includes:
The motion data is input to a trained prediction model to obtain the prediction result of the state of device entering or leaving the electronic fence.

In this embodiment, the data of the acceleration sensor and the direction sensor is used as an input layer of a convolutional neural network, and leaving or entering a coverage range of the electronic fence is used as an output layer of the convolutional neural network, to perform deep learning training. A trained model is converted into a model that is applicable to a micro controller and is inserted into a subordinate tracking device. When the low-power tracking device is located in the electronic fence or approaches the electronic fence, the data acquired by the acceleration sensor and the direction sensor is reasoned through the model; and whether to perform positioning or Wi-Fi scanning is determined according to a reasoning result, to detect the state of entering or leaving the fence.

Further, in an embodiment, whether to detect the state of the device entering or leaving the electronic fence is determined according to the prediction result, which includes:
When the prediction result indicates that the device enters the electronic fence or the device leaves the electronic fence, the detection on the state of the device entering or leaving the electronic fence is activated.

In an exemplary implementation, when the prediction result indicates that the device leaves the electronic fence, the detection on the state of the device entering or leaving the electronic fence is activated; or when the prediction result indicates that the device enters the electronic fence, the detection on the state of the device entering or leaving the electronic fence is activated.

In addition, when the prediction result indicates that the state of the device entering or leaving the electronic fence does not change, namely, when the device continues to be in the electronic fence, the state of the device entering or leaving the electronic fence is detected according to the original setting. For example, timing positioning or timing scanning is performed according to a preset time interval, to detect the state of the device entering or leaving the electronic fence, or, the detection on the state of the device entering or leaving the electronic fence is not activated. Or, when the device continues to be outside the electronic fence, the execution process will be achieved according to the following embodiment:
In addition, the electronic fence includes a geographic electronic fence and a Wi-Fi electronic fence. Therefore, during actual detection, for different types of electronic fences, the present disclosure can use different methods to detect the state of the device entering or leaving the electronic fence.

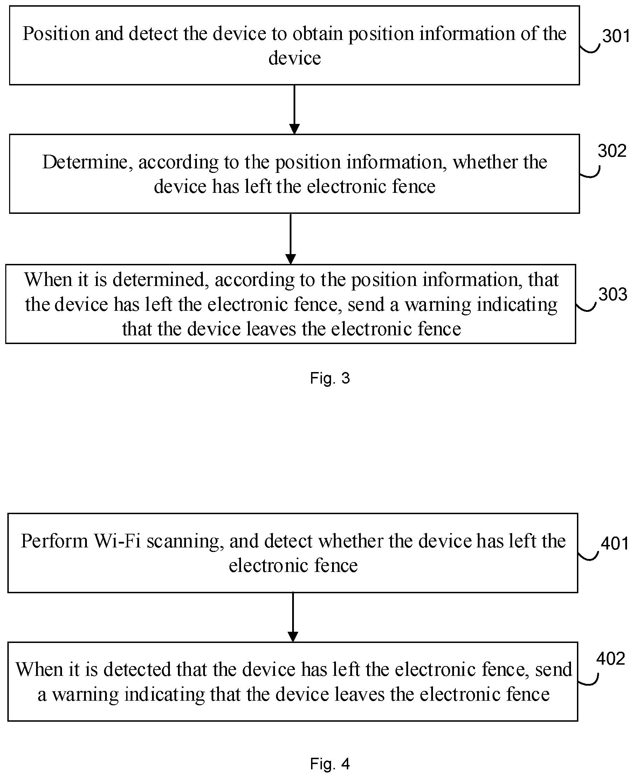

Further, referring to Fig. 3, in an embodiment, when the prediction result indicates that the device leaves the electronic fence, and the electronic fence is a geographic electronic fence, the detection on the state of the device entering or leaving the electronic fence is activated, which includes:
Step 301: The device is positioned and detected to obtain position information of the device.
Step 302: Whether the device has left the electronic fence is determined according to the position information.
Step 303: When it is determined, according to the position information, that the device has left the electronic fence, a warning indicating that the device leaves the electronic fence is sent.

In actual use, when the low-power tracking device is located in the geographic electronic fence, the data acquired by the acceleration sensor and the direction sensor is predicted. If it is predicted that the device leaves the geographic electronic fence, the device is positioned once to confirm whether the device has left the electronic fence. If the device has left the electronic fence, a warning notification is sent to a user.

In an embodiment, when it is determined, according to the position information, that the device has left the electronic fence, the method further includes:
A distance and relative direction between the device and a center of the electronic fence is obtained according to the position information;
whether the distance is greater than a radius of the electronic fence and less than a first preset threshold is determined;
when it is determined that the distance is greater than the radius of the electronic fence and less than the first preset threshold, motion data of the device is obtained, and a state of the device entering or leaving the electronic fence is predicted according to the motion data, to obtain a prediction result;
when the prediction result indicates that the device enters the electronic fence, the device is positioned and detected to obtain position information of the device; whether the device has entered the electronic fence is determined according to the position information; when it is determined, according to the position information, that the device has entered electronic fence, a warning indicating that the device enters the electronic fence is sent; and when it is determined, according to the position information, that the device does not enter the electronic fence, the operation of obtaining motion data of the device, and predicting, according to the motion data, a state of the device entering or leaving the electronic fence is continued to be executed.

In this embodiment, when the low-power tracking device is located outside the geographic electronic fence, the distance and relative direction from the center of the fence are calculated during each timing positioning; when the distance is greater than the radius of the fence and less than the first preset threshold, the state is predicted through the data acquired by the acceleration sensor and the direction sensor; when the prediction result indicates that the device enters the range of the fence, the device is positioned once; if the device has entered the range of the fence, a warning notification indicating that the device enters the fence is sent; and if the device does not enter the fence, next prediction and positioning will be continued to be performed through the above method.

Further, referring to Fig. 4, in an embodiment, when the prediction result indicates that the device leaves the electronic fence, and the electronic fence is a Wi-Fi electronic fence, the detection on the state of the device entering or leaving the electronic fence is activated, which includes:
Step 401: Wi-Fi scanning is performed, and whether the device has left the electronic fence is detected.
Step 402: When it is detected that the device has left the electronic fence, a warning indicating that the device leaves the electronic fence is sent.

In actual use, when the low-power tracking device is located in the Wi-Fi electronic fence, if the device enters the fence for the first time, the device is positioned once, and data is recorded; the state is predicted through the data acquired by the acceleration sensor and the direction sensor; if the prediction result indicates that the device leaves the Wi-Fi electronic fence, Wi-Fi scanning is performed to detect whether the device has left the fence; if the device has left the range of the fence, a warning notification indictaing that the device leaves the Wi-Fi electronic fence is sent to a user; and if the device does not leave the fence, next prediction and Wi-Fi scanning will be continued to be performed through the above method.

In an embodiment, when it is detected that the device has left the electronic fence, the method further includes:
Positioning data when the device enters the electronic fence for the first time is obtained;
a distance and direction between the device and the positioning data is calculated;
when the distance is greater than a coverage range of the electronic fence and less than a second preset threshold, motion data of the device is obtained, and a state of the device entering or leaving the electronic fence is predicted according to the motion data, to obtain a prediction result;
when the prediction result indicates that the device enters the electronic fence, Wi-Fi scanning is performed, and whether the device has entered the electronic fence is detected; and when it is detected that the device has entered electronic fence, a warning indicating that the device enters the electronic fence is sent; and when it is detected the device does not enter the electronic fence, the operation of obtaining motion data of the device, and predicting, according to the motion data, a state of the device entering or leaving the electronic fence is continued to be executed.

In this embodiment, when the low-power tracking device is located outside the Wi-Fi electronic fence, if there is positioning data within the fence, the distance and relative direction from the positioning data within the fence are calculated during each timing positioning; when the distance is greater than the coverage range of the fence and less than the second preset threshold, the state is predicted through the data acquired by the acceleration sensor and the direction sensor; when the prediction result indicates that the device enters the range of the fence, Wi-Fi scanning is performed once; if the device has entered the range of the fence, a warning notification indicating that the device enters the fence is sent; and if the device does not enter the fence, next reasoning and Wi-Fi scanning will be continued to be performed through the above method.

In the electronic fence warning method provided by the embodiments of the present disclosure includes: Motion data of a device is read; a state of the device entering or leaving an electronic fence is predicted according to the motion data; and detection on the state of the device entering or leaving the electronic fence is activated according to the prediction result. The solution provided by the present disclosure can improve the fence warning sensitivity and does not affect the power consumption of the device.

The present disclosure will be explained in detail below in conjunction with the embodiments.

The embodiments of this application provide an electronic fence warning method for a low-power tracking device, to solve the problem of a warning delay during processing of an electronic fence of the low-power tracking device and even the problem of fence state omission. The fence warning method provided in this embodiment can improve the sensitivity of fence warning and does not affect the power consumption of the device.

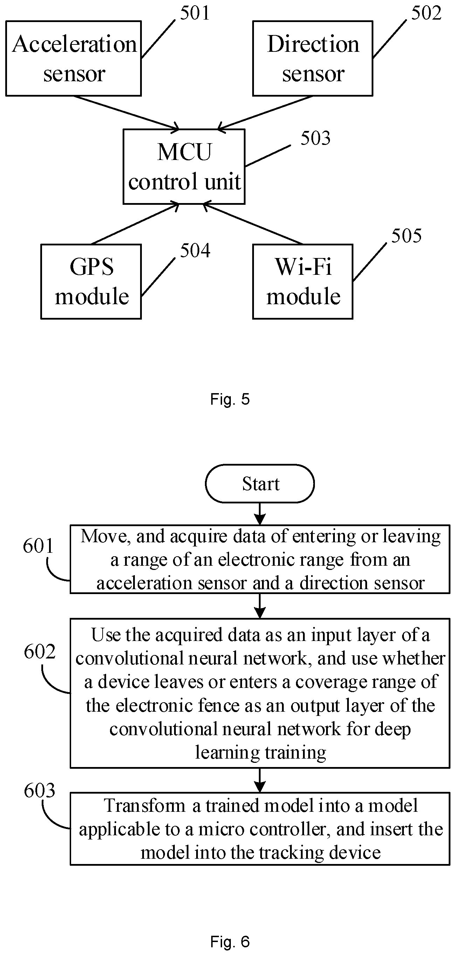

In an exemplary implementation, referring to Fig. 5, the low-power tracking device may include, but is not limited to: an acceleration sensor 501, a direction sensor 502, a micro control unit, MCU, control module 503, a global positioning system, GPS module 504, and a Wi-Fi module 505. The acceleration sensor is configured to acquire acceleration information, and the direction sensor is configured to acquire device operation direction information. Of course, other components with the same functionality can also be used in this embodiment.

The structures shown in Fig. 5 are only illustrative and does not limit the structures of the low-power tracking device mentioned above. For example, the low-power tracking device can further include more or fewer assemblies than those shown in Fig. 5, or have configurations different from those shown in Fig. 5.

Further, referring to Fig. 6, a model training process of the low-power tracking device may include the following operations.

Step 601: The low-power tracking device is used to move and acquire data of entering or leaving the range of the electronic range from the acceleration sensor and the direction sensor.

Step 602: The acquired data is used as an input layer of a convolutional neural network, and whether the device leaves or enters a coverage range of the electronic fence is used as an output layer of the convolutional neural network for deep learning training.

Step 603: A trained model is transformed into a model applicable to a micro controller, and the model is inserted into the tracking device.

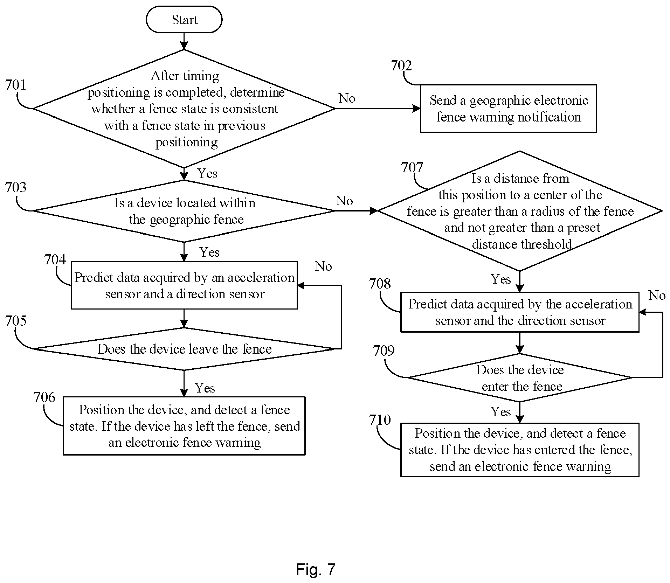

In addition, referring to Fig. 7, when the electronic fence of the low-power tracking device is a geographic electronic fence, the warning flow is as follows:
Step 701: After the positioning of the low-power tracking device is completed, whether the state of the device relative to the geographic electronic fence is consistent with a previous fence state is determined.
Step 702: If the state of the device relative to the geographic electronic fence is inconsistent with the previous fence state, a fence state warning notification is sent to a user.
Step 703: Whether the low-power tracking device is located within the geographic electronic fence is determined.
Step 704: If the device is located within the geographic electronic fence, data acquired by the acceleration sensor and the direction sensor is predicted.
Step 705: Whether the device leaves the fence is determined according to a prediction result.
Step 706: If the prediction result indicates that the device leaves the fence, the device is positioned, and a fence state is detected; and if the device has left the fence, a geographic electronic fence warning is sent. Otherwise, step 704 and step 705 are repeated.
Step 707: If the device is located outside the geographic electronic fence, whether a distance from the previous timing positioning to a center of the fence is greater than a radius of the fence and does not exceed a preset threshold.
Step 708: If the device is located outside the fence, and the distance from the center of the fence is greater than the radius of the fence and does not exceed the preset threshold, the data acquired by the acceleration sensor and direction sensor is predicted.
Step 709: A prediction result is judged.
Step 710: If the prediction result indicates that the device enters the fence, the device is positioned, and a fence state is detected; and if the device has entered the fence, an electronic fence warning is sent. Otherwise, step 708 and step 709 are repeated.

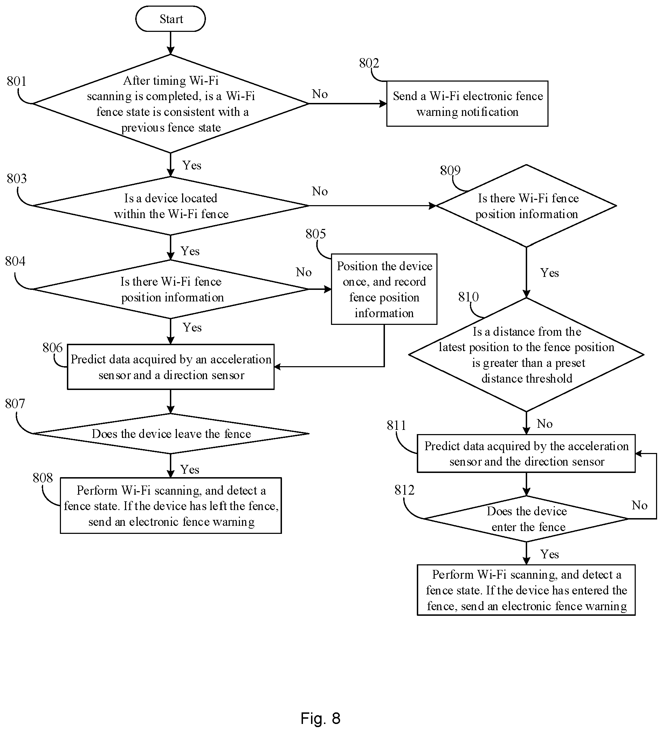

In addition, referring to Fig. 8, when the electronic fence of the low-power tracking device is a Wi-Fi electronic fence, the warning flow is as follows:
Step 801: After the Wi-Fi scanning of the low-power tracking device is completed, whether the state of the device relative to the Wi-Fi electronic fence is consistent with a previous fence state is determined.
Step 802: If the state of the device relative to the Wi-Fi electronic fence is inconsistent with the previous fence state, a fence state warning notification is sent to a user.
Step 803: Whether the device is located within the Wi-Fi electronic fence is determined.
Step 804: Whether the device has fence position information is determined.
Step 805: If the device is located within the Wi-Fi electronic fence and does not have fence position information, the device is positioned once, and fence position information is recorded.
Step 806: The data acquired by the acceleration sensor and the direction sensor is predicted.
Step 807: Whether the device leaves the fence is predicted.
Step 808: If the prediction result indicates that the device leaves the fence, Wi-Fi scanning is performed, and a fence state is detected; and if the device has left the fence, a Wi-Fi electronic fence warning is sent. Otherwise, step 806 and step 807 are repeated.
Step 809: Whether the device is located outside the Wi-Fi electronic fence is determined, and fence position information is saved.
Step 810: Whether a distance between the device and the fence position is greater than a preset threshold is determined.
Step 811: If the distance between the device and the fence is not greater than the preset distance threshold, the data acquired by the acceleration sensor and the direction sensor is predicted.
Step 812: If the prediction result indicates that the device enters the fence, Wi-Fi scanning is performed, and a fence state is detected; and if the device has entered the fence, an electronic fence warning is sent. Otherwise, step 811 and step 812 are repeated.

This embodiment can improve the fence warning sensitivity and does not affect the power consumption of the device.

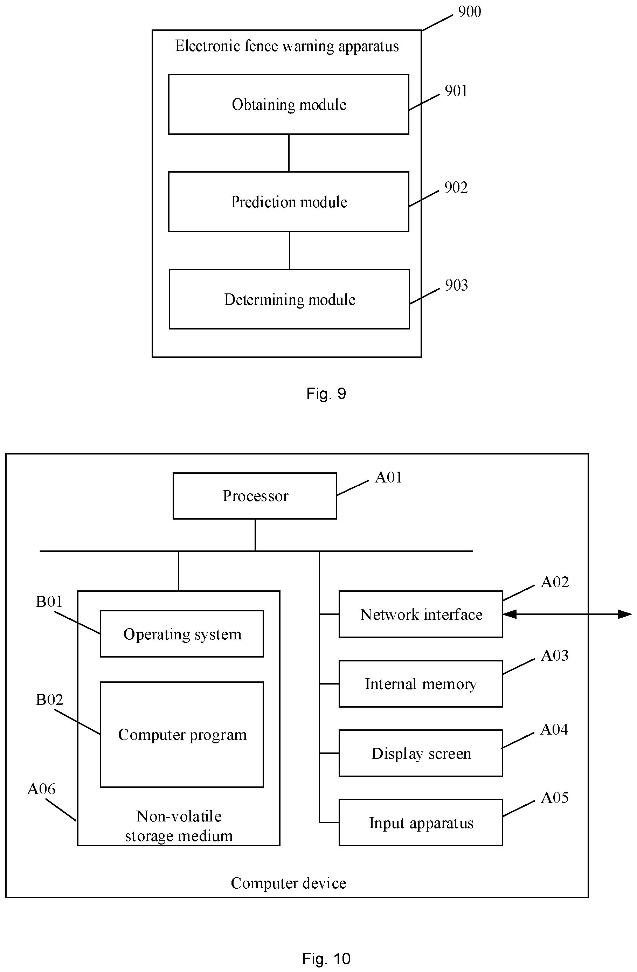

To achieve the method of the embodiments of the present disclosure, the embodiments of the present disclosure further provide an electronic fence warning apparatus. As shown in Fig. 9, the electronic fence warning apparatus 900 includes: an obtaining module 901, a prediction module 902, and an activation module 903.

The obtaining module 901 is configured to read motion data of a device;
the prediction module 902 is configured to predict, according to the motion data, a state of the device entering or leaving an electronic fence to obtain a prediction result; and
the activation module 903 is configured to activate, according to the prediction result, detection on the state of the device entering or leaving the electronic fence.

During practical applications, the obtaining module 901, the prediction module 902, and the activation module 903 can be achieved by a processor in the electronic fence warning apparatus.

It should be noted that: When the above apparatus provided by the above embodiment is implemented, the apparatus is only illustrated by division of all the above program modules. In practical applications, the foregoing processing may be allocated to and completed by different program modules as required, namely, an inner structure of a terminal is divided into different program modules, so as to complete all or some of the processings described above. In addition, the apparatus provided in the foregoing embodiment and the method embodiment fall within the same conception. For details of a specific implementation process of the apparatus, refer to the method embodiments. Details are not described here again.

To implement the method of the embodiments of the present disclosure, the embodiments of the present disclosure further provide a computer program product. The computer program product includes computer instructions which are stored in a computer-readable storage medium. A processor of a computer device reads the computer instructions from the computer-readable storage medium and executes the computer instructions, causing the computer device to execute the steps of the above method.

Based on the hardware implementation of the above program modules, and to implement the method of the embodiments of the present disclosure, the embodiments of the present disclosure further provide an electronic device (a computer device). In an exemplary implementation, in an embodiment, the computer device may be a terminal, a diagram of an internal structure of which can be as shown in Fig. 10. The computer device includes a processor A01, a network interface A02, a display screen A04, an input apparatus A05, a memory (not shown) which are connected through a system bus. The processor A01 of the computer device is configured to provide computation and control abilities. The memory of the computer device includes an internal memory A03 and a non-volatile storage medium A06. The non-volatile storage medium A06 stores an operating system B01 and a computer program B02. The internal memory A03 provides an environment for running the operating system B01 and the computer program B02 in the non-volatile storage medium A06. The network interface A02 of the computer device is configured to communicate with an external terminal through network connection. The computer program is executed by the processor A01 to implement the method of any one of the above embodiments. The display screen A04 of the computer device may be a liquid crystal display screen or an e-ink display screen. The input apparatus A05 of the computer device may be a touch layer covering the display screen, or may be a button, a trackball, or a touchpad arranged on a housing of the computer device, or may be an external keyboard, touchpad, a mouse or the like.

A person skilled in the art may understand that, the structure shown in Fig. 10 is merely a block diagram of partial structures related to a solution in the present disclosure, and does not constitute a limitation on the computer device to which the solution of the present disclosure is applied. Specifically, the computer device may include more components or fewer components than those shown in the figure, or some components may be combined, or a different component deployment may be used.

The device provided by the embodiments of the present disclosure includes a processor, a memory, and a program stored on the memory and runnable on the processor. The processor runs the program to implement the method of any one of the above embodiments.

Those skilled in the art should understand that the embodiments of the present disclosure may be methods, systems or computer program products. Therefore, the present disclosure may adopt the form of a complete hardware embodiment, a complete software embodiment, or a software and hardware combination embodiment. In addition, the present disclosure may adopt the form of a computer program product implemented on one or multiple computer-sensitive storage media (including, but not limited to, a magnetic disk memory, a compact disc read-only memory, CD-ROM, an optical memory and the like) including computer-sensitive program codes.

The present disclosure is described by referring to flowcharts and/or block diagrams of methods, devices (systems) and computer program products according to the embodiments of the present disclosure. It is worthwhile to note that computer program instructions can be used to implement each flow and/or each block in the flowcharts and/or the block diagrams and a combination of a flow and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more flows in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more flows in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more flows in the flowcharts and/or in one or more blocks in the block diagrams.

In one typical configuration, a computing device includes one or multiple central processing units, CPUs, an input/output interface, a network interface and an internal memory.

The memory may include a volatile memory in a computer readable medium, a RAM and/or a non-volatile memory, etc., such as an ROM or a flash RAM. The memory is an example of the computer-readable medium.

The computer-readable medium includes non-volatile, volatile, movable, and unmovable media that can store information by using any method or technology. The information can be computer-readable instructions, data structures, program modules, or other data. Examples of computer storage media include, but not limited to, a Phase-change Random Access Memory, PRAM, a Static Random Access Memory, SRAM, a Dynamic Random Access Memory, DRAM, other types of RAMs, an ROM, an Electrically Erasable Programmable Read-Only Memory, EEPROM, a flash memory or other internal memory technologies, a CD-ROM, a Digital Video Disk, DVD or other optical memories, a magnetic cartridge type magnetic tape, a magnetic tape/disk storage device or other magnetic storage devices or any other non-transmitting media, and may be used for storing information that may be accessed by the computing device. The computer readable medium does not include transitory media, such as modulated data signals and carriers, according to definitions herein.

It can be understood that the memory of the embodiments of the present disclosure may be a volatile memory or a non-volatile memory, or may include both a volatile memory and a non-volatile memory. The non-volatile memory can be a read only memory, ROM, a programmable read-only memory, PROM, an erasable programmable read-only memory, EPROM, an electrically erasable programmable read-only memory, EEPROM, a ferromagnetic random access memory, FRAM, a flash memory, a magnetic surface memory, an optical disc, or a compact disc read-only memory; and the magnetic surface memory can be either a magnetic disk memory or magnetic tape memory. The volatile memory may be a random access, RAM serving as an external cache. Through illustrative but not limited description, RAMs in many forms, for example, a Static Random Access Memory, SRAM, a Synchronous Static Random Access Memory, SSRAM, a Dynamic Random Access Memory, DRAM, a Synchronous Dynamic Random Access Memory, SDRAM, a Double Data Rate Synchronous Dynamic Random Access Memory, DDRSDRAM, an Enhanced Synchronous Dynamic Random Access Memory, ESDRAM, a SyncLink Dynamic Random Access Memory, SLDRAM, and a Direct Rambus Random Access Memory, DRRAM. The memory described in the embodiments of the present disclosure aims to include these and any other suitable types of memories.

It is worthwhile to note that the terms "comprise", "include", or any other variation thereof are intended to cover a non-exclusive inclusion, so that a process, a method, an article, or a device that includes a list of elements includes those elements and further includes other elements not expressly listed or inherent to such a process, method, article, or device. Without more constraints, an element limited by "includes a ..." does not preclude the existence of additional identical elements in the process, method, product, or device that includes the element.

The above contents are only the embodiments of the present disclosure, but not intended to limit the present disclosure. Those skilled in the art can make various changes and modifications to the present disclosure. Any modifications, equivalent replacements, improvements and the like that are made without departing from the spirit and the principle of the present disclosure shall all fall within the scope of claims of the present disclosure.

## Claims

1. An electronic fence alarm method, wherein the method comprises:
reading motion data of a device;
predicting, according to the motion data, a state describing the device's entry or exit from an electronic fence to obtain a prediction result; and
activating, according to the prediction result, detection on the state describing the device's entry or exit from the electronic fence.

2. The method according to claim 1, wherein before the obtaining motion data of a device, the method further comprises:
positioning the device to obtain position information of the device;
determining whether the position information of the device is within a preset position range; and
reading the motion data of the device when the position information of the device is within the preset position range.

3. The method according to claim 1, wherein the predicting, according to the motion data, a state describing the device's entry or exit from an electronic fence to obtain a prediction result comprises:
calculating number of steps of walking and a direction of walking of the device according to the motion data; and
predicting, according to the number of steps of walking and the direction of walking of the device, the state describing the device's entry or exit from the electronic fence to obtain the prediction result.

4. The method according to claim 1, wherein the predicting, according to the motion data, a state describing the device's entry or exit from an electronic fence to obtain a prediction result comprises:
inputting the motion data to a trained prediction model to obtain the prediction result of the state of device entering or leaving the electronic fence.

5. The method according to claim 1, wherein the activating, according to the prediction result, detection on the state describing the device's entry or exit from the electronic fence comprises:
when the prediction result indicates that the device is entering the electronic fence or the device is leaving the electronic fence, activating the detection on the state describing the device's entry or exit from the electronic fence.

6. The method according to claim 5, wherein when the prediction result indicates that the device is leaving the electronic fence, and the electronic fence is a geographic electronic fence, the activating the detection on the state describing the device's entry or exit from the electronic fence comprises:
positioning the device to obtain position information of the device;
determining, according to the position information, whether the device has left the electronic fence; and
when it is determined, according to the position information, that the device has left the electronic fence, sending a warning indicating that the device leaves the electronic fence.

7. The method according to claim 6, wherein when it is determined, according to the position information, that the device has left the electronic fence, the method further comprises:
obtaining a distance and a direction of the device relative to a center of the electronic fence according to the position information;
determining whether the distance is greater than a radius of the electronic fence and less than a first preset threshold;
when it is determined that the distance is greater than the radius of the electronic fence and less than the first preset threshold, obtaining the motion data of the device, and predicting, according to the motion data, the state describing the device's entry or exit from the electronic fence to obtain a prediction result;
when the prediction result indicates that the device is entering the electronic fence, positioning the device to obtain position information of the device; determining, according to the position information, whether the device has entered the electronic fence; and when it is determined, according to the position information, that the device has entered electronic fence, sending a warning indicating that the device enters the electronic fence; or, when it is determined, according to the position information, that the device does not enter the electronic fence, continuing to execute the operation of obtaining the motion data of the device, and predicting, according to the motion data, the state describing the device's entry or exit from the electronic fence.

8. The method according to claim 5, wherein when the prediction result indicates that the device is leaving the electronic fence, and the electronic fence is a Wireless Fidelity, Wi-Fi electronic fence, the activating the detection on the state describing the device's entry or exit from the electronic fence comprises:
performing Wi-Fi scanning, and detecting whether the device has left the electronic fence; and
when it is detected that the device has left the electronic fence, sending a warning indicating that the device leaves the electronic fence.

9. The method according to claim 8, wherein when it is detected that the device has left the electronic fence, the method further comprises:
obtaining positioning data when the device enters the electronic fence for the first time;
calculating a distance and a direction between the device and the positioning data;
when the distance is greater than a coverage range of the electronic fence and less than a second preset threshold, obtaining the motion data of the device, and predicting, according to the motion data, the state describing the device's entry or exit from the electronic fence to obtain a prediction result;
when the prediction result indicates that the device is entering the electronic fence, performing Wi-Fi scanning, and detecting whether the device has entered the electronic fence; and when it is detected that the device has entered electronic fence, sending a warning indicating that the device enters the electronic fence; or, when it is detected the device does not enter the electronic fence, continuing to execute the operation of obtaining the motion data of the device, and predicting, according to the motion data, the state describing the device's entry or exit from the electronic fence.

10. An electronic device, comprising: a processor and a memory configured to store a computer program runnable on the processor, wherein the processor is configured to run the computer program to execute the steps of the method according to any one of claims 1 to 9.

11. A storage medium, having a computer program stored thereon, wherein the computer program, when run by a processor, implements the steps of the method according to any one of claims 1 to 9.
